# EUROPEAN PATENT APPLICATION

(11) **EP 4 589 521 A1**
(43) Date of publication of application: **23.07.2025**
(21) Application number: 23864936.2
(22) Date of filing: 03.02.2023
(51) Int. Cl.: G06Q 50/06, G06Q 30/0283

(54) **GAS PRICE MANAGEMENT SYSTEM AND GAS PRICE MANAGEMENT METHOD**

(30) Priority: 13.09.2022 JP 2022145235
(71) Applicant: Hitachi, Ltd., Tokyo 100-8280 (JP)
(72) Inventor: WATANABE, Ayumi, Tokyo 100-8280 (JP); YASHIKI, Tatsurou, Tokyo 100-8280 (JP); MIZUKAMI, Takaaki, Tokyo 100-8280 (JP); SASAKI, Takashi, Tokyo 100-8280 (JP); IIZUKA, Hidehiro, Tokyo 100-8280 (JP); ISHIDA, Naoyuki, Tokyo 100-8280 (JP); FUJITA, Shinji, Tokyo 100-8280 (JP); KAWAHARA, Yohei, Tokyo 100-8280 (JP); YOSHIMOTO, Naoki, Tokyo 100-8280 (JP); KANI, Yuko, Tokyo 100-8280 (JP); INAGAKI, Ryohei, Tokyo 100-8280 (JP)
(74) Representative: MERH-IP Matias Erny Reichl Hoffmann Patentanwälte PartG mbB
(86) International application number: PCT/JP2023/003554
(87) International publication number: WO 2024/057569

(57) **Abstract**

A gas price management system includes: a gas information management unit configured to manage information on feed gas including gas components having a plurality of origins with different environmental values; and a gas price determination unit configured to determine a price of the feed gas. The gas information management unit transmits concentration information of the feed gas to the gas price determination unit, and the gas price determination unit sets the price of the feed gas using a ratio of each of the gas components in the feed gas obtained from the concentration information of the feed gas and a gas price set based on the environmental value of each of the gas components. This configuration enables setting a gas price reflecting an environmental value of each of gas components constituting a mixed gas in supply of mixed gas containing the gas component different in an environmental value due to a manufacturing method or origin.

## Description

### Technical Field

The present disclosure relates to a gas price management system and a gas price management method.

### Background Art

For decarbonization, use of hydrogen as a fuel without causing a discharge of carbon dioxide has been paid attention.

Hydrogen is produced not only by electrolysis of water using renewable energy but also by various methods such as reforming of natural gas and obtaining hydrogen as a by-product of iron mills and chemical factories. Depending on a manufacturing method, environmental load such as a carbon dioxide discharge rate during manufacturing, manufacturing cost, stability of a feed rate, and the like are different.

Although hydrogen different in a manufacturing method and origin will be used in use of hydrogen in the future, a consumer (user) has not prepared a method for obtaining information on hydrogen to be used.

PTL 1 discloses a technique as a solution to a problem that a user cannot be involved in selection of a manufacturing method of hydrogen, the technique enabling the user to determine whether to receive supply of hydrogen contained in a storage unit by using a hydrogen gas supply system including a user interface unit that outputs load information indicating an environmental load during manufacturing of the hydrogen to be supplied to the user and quality information indicating quality of the hydrogen.

### Citation List

### Patent Literature

PTL 1: JP 2020-86503 A

### Summary of Invention

### Technical Problem

PTL 1 causes the storage unit to discriminate hydrogen obtained by different manufacturing methods. However, supply forms of hydrogen exist other than filling and storing in a plurality of storage units and taking out each time as in a hydrogen station.

The Ministry of the Environment started a "manufacturing of renewable electrolytic hydrogen and hydrogen mixed gas supply and utilization verification project" in 2019. The present project causes hydrogen to be manufactured by electrolysis of water using power of wind power generation, and the hydrogen and imitation gas equivalent to city gas are mixed to form a mixed gas that is supplied to a use place through a gas pipe. The mixed gas is directly used in a gas stove, a water heater, and the like.

Hydrogen supply through a pipeline as described above is assumed that hydrogen different in a manufacturing method and origin is injected into one pipeline and mixed.

The hydrogen gas supply system described in PTL 1 is assumed that hydrogen is delivered using a hydrogen gas delivery vehicle. For this reason, PTL 1 does not disclose means or the like for providing the user with information on a manufacturing method, origin, and the like of hydrogen gas when the hydrogen gas is transported through a pipeline.

When mixed hydrogen in which hydrogen different in environmental load and manufacturing cost due to differences in a manufacturing method and origin is mixed is supplied through a gas grid such as a pipeline, the manufacturing method and the origin of hydrogen constituting the mixed hydrogen are less likely to be managed. This situation requires means for price setting of the mixed hydrogen reflecting the manufacturing method and the origin.

It is an object of the present disclosure to set a gas price reflecting an environmental value of each of gas components constituting a mixed gas in supply of mixed gas containing the gas component different in an environmental value due to a manufacturing method or origin.

### Solution to Problem

A gas price management system of the present disclosure includes: a gas information management unit configured to manage information on a feed gas including gas components having a plurality of origins different in an environmental value; and a gas price determination unit configured to determine a price of the feed gas, in which the gas information management unit transmits concentration information on the feed gas to the gas price determination unit, and the gas price determination unit sets the price of the feed gas using a ratio of each of the gas components in the feed gas obtained from the concentration information on the feed gas and a gas price set based on the environmental value of each of the gas components.

### Advantageous Effects of Invention

The present disclosure enables setting a gas price reflecting an environmental value of each of gas components constituting a mixed gas in supply of mixed gas containing the gas component different in an environmental value due to a manufacturing method or origin.

### Brief Description of Drawings

[FIG. 1] FIG. 1 is a schematic diagram illustrating a gas price management system according to a first embodiment.
[FIG. 2] FIG. 2 is a flowchart illustrating a gas price management method according to the first embodiment.
[FIG. 3] FIG. 3 is a diagram illustrating an example of a display screen of a gas information management unit 5 in FIG. 1.
[FIG. 4] FIG. 4 is a schematic diagram illustrating a gas price management system according to a third embodiment.
[FIG. 5] FIG. 5 is a flowchart illustrating a method for calculating fluid information in a pipeline.
[FIG. 6] FIG. 6 is a schematic diagram illustrating a gas price management system according to a fifth embodiment.

### Description of Embodiments

The present disclosure describes the following about hydrogen as an example: a price setting method when hydrogen manufactured by electrolysis of water using energy such as renewable energy, or by reforming natural gas, for example, is supplied to a hydrogen user; and management and control of a supply situation.

Hereinafter, embodiments of the present disclosure will be described with reference to the drawings. The same components are denoted by the same reference numerals, and duplicated description may not be described. The present disclosure is not limited to the embodiments below.

### First embodiment

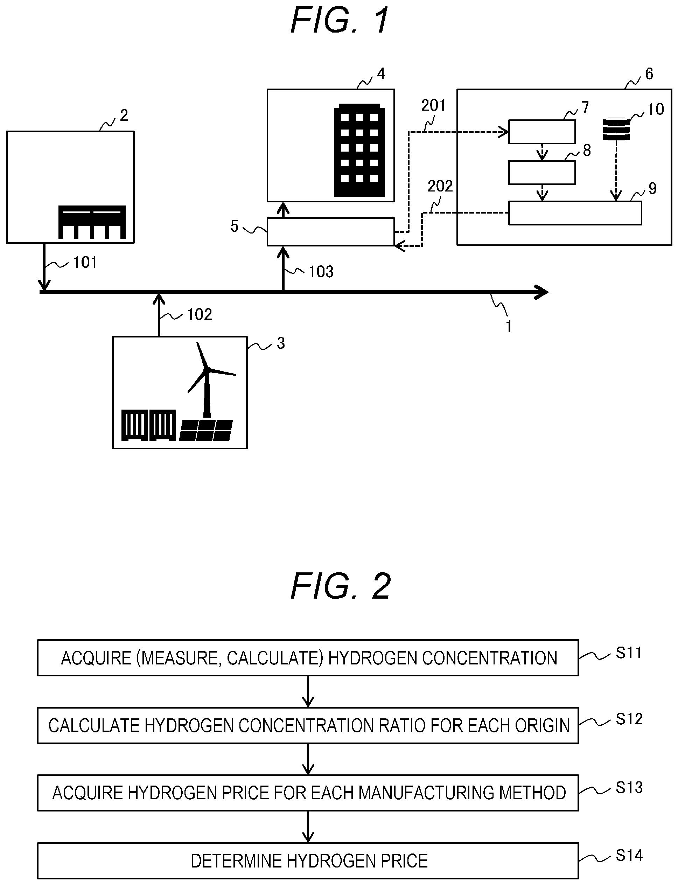

FIG. 1 is a schematic diagram illustrating a gas price management system according to a first embodiment. Although the present embodiment uses the whole of mechanisms illustrated in FIG. 1, the whole of the mechanisms is not necessarily used, and a part thereof may be used.

An example of a gas grid will be described in the present embodiment, in which a by-product hydrogen supply base 2 that supplies by-product hydrogen 101, a renewable hydrogen supply base 3 that supplies renewable hydrogen 102 manufactured using renewable energy such as wind power and solar power generation, and a gas usage base 4 of a consumer are connected to a pipeline 1 for gas as illustrated in FIG. 1. The by-product hydrogen supply base 2 and the renewable hydrogen supply base 3 are each a supply point. The gas usage base 4 is a demand point.

Here, the term, "renewable", is an abbreviation for "renewable energy". The term, "renewable hydrogen", refers to hydrogen manufactured using renewable energy. The term, "by-product hydrogen", refers to hydrogen secondarily produced when caustic soda (NaOH), chlorine gas (Cl₂), or the like is manufactured.

The term, "green hydrogen" herein, refers to hydrogen produced by electrolyzing water to be reduced into to hydrogen and oxygen. The term, "blue hydrogen" herein, refers to hydrogen obtained when fossil fuels such as natural gas and coal are decomposed into hydrogen and carbon dioxide by steam methane reforming, automatic thermal decomposition, or the like, and the carbon dioxide is recovered before being discharged to the atmosphere. The term, "gray hydrogen" herein, refers to hydrogen produced by a process as with the blue hydrogen, and is obtained when generated carbon dioxide is directly released into the atmosphere without being recovered.

The pipeline 1 may be conventionally prepared for supplying methane derived from natural gas to a consumer. In this case, a mixed gas of methane, the by-product hydrogen 101, and the renewable hydrogen 102 is supplied to the consumer through the pipeline 1.

The gas usage base 4 of the consumer receives gas supply through the pipeline 1 via the gas information management unit 5. Although the by-product hydrogen 101 and the renewable hydrogen 102 are assumed to exist in the same pipeline 1 as mixed hydrogen in the present embodiment, the type and the number of types of gas are not limited as long as gases different in an environmental load such as manufacturing cost, a carbon dioxide discharge rate, and energy consumption during manufacturing and transportation, and different in an added value and the like due to origin, are mixed. The term, "environmental value", is used herein as a concept including manufacturing cost, an environmental load, an added value, and the like. The environmental load includes a carbon dioxide discharge rate during manufacturing and transportation, and energy consumption during the manufacturing and the transportation.

A gas component to be used by the consumer is not limited to hydrogen, and may be methane, propane, or the like. For example, the feed gas 103 may be a mixed gas of methane derived from natural gas and synthetic methane.

The gas information management unit 5 acquires concentration information 201 on the feed gas 103 supplied to the gas usage base 4 of the consumer, and transmits the concentration information to a gas price determination unit 6. The term, "concentration information on the feed gas", refers to information indicating a concentration of each gas different in a manufacturing method or origin. For example, when the feed gas 103 contains the by-product hydrogen 101 and the renewable hydrogen 102 as hydrogen, the information shows a concentration of each of them. The gas information management unit 5 is desired to be able to acquire information on the by-product hydrogen supply base 2 and the renewable hydrogen supply base 3 through an electric communication line such as the Internet.

The gas information management unit 5 can be implemented by software in which processor such as a CPU interprets and executes a program for implementing each function.

Although processing such as calculation of "concentration information on feed gas" is performed mainly focusing on hydrogen herein, the processing such as the calculation of the "concentration information on feed gas" is performed focusing on a gas of interest when the gas of interest is other than hydrogen.

The gas price determination unit 6 determines a price of the feed gas 103. The gas price determination unit 6 includes a gas information acquisition unit 7, a gas concentration ratio calculation unit 8, a gas price calculation unit 9, and a gas price database 10.

The gas price determination unit 6 can be implemented by software in which processor such as a CPU interprets and executes a program for implementing each function. The gas price determination unit 6 includes a memory, a CPU, a storage device (SSD, HDD, etc.), a communication device, and an I/F, for example. Information such as a program, a table, and a file for implementing each function can be stored in recording devices such as a memory and a solid state drive (SSD), or recording media such as an integrated circuit (IC) card, a secure digital (SD) card, and a digital versatile disc (DVD), in addition to the HDD. The information can be also stored on a cloud, or processing such as calculation can be performed on the cloud. The gas information acquisition unit 7 acquires gas concentration information from the gas information management unit 5. The gas information acquisition unit 7 corresponds to the communication device described above, for example. The gas concentration ratio calculation unit 8 calculates a ratio of gas for each manufacturing method or each origin using the gas concentration information.

As an example, the feed gas 103 containing the by-product hydrogen 101, the renewable hydrogen 102, and methane gas will be described.

When the by-product hydrogen 101, the renewable hydrogen 102, and the methane gas have concentrations of 10 vol%, 5 vol%, and 85 vol% for the entire gas, respectively, the hydrogen gas has a concentration of 15 vol% in the feed gas 103. Thus, the by-product hydrogen 101 and the renewable hydrogen 102 have ratios of 2/3 and 1/3 to the hydrogen gas concentration, respectively. The gas concentration ratio calculation unit 8 transmits the ratio of gas for each manufacturing method or each origin to the gas price calculation unit 9.

The gas price calculation unit 9 determines the price of the feed gas 103 based on the ratio of the gas for each manufacturing method or each origin and the information in the gas price database 10 storing gas prices for each manufacturing method and each origin. When the by-product hydrogen 101 and the renewable hydrogen 102 have ratios of 2/3 and 1/3 to the hydrogen gas concentration, respectively, the price of hydrogen gas in the feed gas 103 is determined by a weighted average in which the ratios are weighted. Additionally, the price of the feed gas 103 may be calculated by a weighted average based on a ratio for each gas type such as hydrogen or methane.

The gas price determination unit 6 calculates price information 202 of the feed gas 103 that is returned to the gas information management unit 5. The gas information management unit 5 presents the price of the feed gas 103 on a screen. As a result, the consumer can obtain the price of the feed gas 103 and the environmental load information presented on the screen of the gas information management unit 5 to determine whether to use the gas.

FIG. 2 is a flowchart illustrating a gas price management method according to the present embodiment.

In FIG. 2, first, the gas information acquisition unit 7 acquires a hydrogen concentration (concentration of gas of interest) (step S11). In this case, the hydrogen concentration may use a value included in the concentration information 201 on the feed gas 103 acquired by the gas information management unit 5, may be calculated from the concentration information 201 on the feed gas 103, or may be measured by the gas information management unit 5.

A concentration of each of gas components contained in the feed gas 103 may be measured by a concentration sensor. Alternatively, the concentration may be estimated by a soft sensor. Here, the soft sensor refers to a sensor that calculates estimation of a value that cannot be actually measured, as if to directly measure the value. In this case, an algorithm using a Kalman filter, a neural network, fuzzy logic, or the like may be used. The concentration of the gas component may be estimated by simulation for a pipeline. The concentration of the gas component also may be acquired by a combination of a concentration sensor, a soft sensor, simulation, and the like.

Next, the gas concentration ratio calculation unit 8 calculates a ratio of each gas (hydrogen) determined by a manufacturing method and origin (step S12). Then, the gas price calculation unit 9 acquires a price of each gas (hydrogen) corresponding to the manufacturing method and the origin (step S13).

Subsequently, the gas price calculation unit 9 determines the price of the feed gas 103 using the ratio of each gas (hydrogen) corresponding to the manufacturing method and the origin and the information in the gas price database 10 storing the price of each gas (hydrogen) determined by the manufacturing method and the origin (step S14).

The price of the gas (hydrogen) may be set based on an environmental value of each gas (hydrogen) determined by the manufacturing method or the origin.

The expression, "each gas determined by a manufacturing method and origin" in the above description can be substituted by the expression, "gas components having a plurality of origins different in an environmental value". That is, the "manufacturing method" can also be considered as one of "origin".

Thus, the feed gas 103 contains gas components having a plurality of origins different in an environmental value.

### Second embodiment

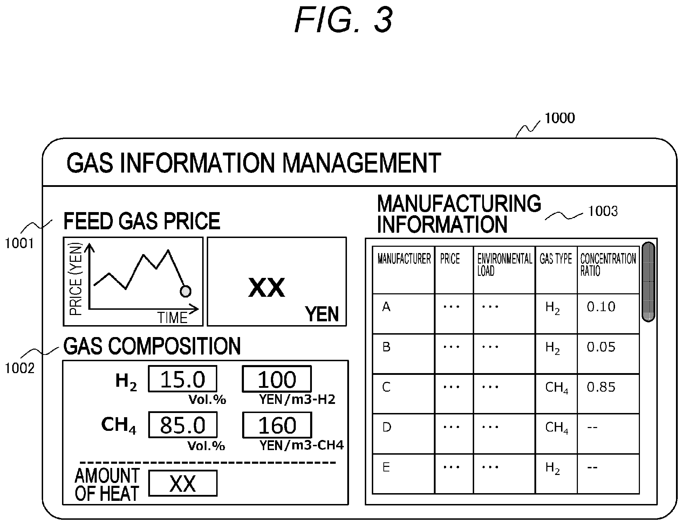

FIG. 3 is a diagram illustrating an example of a display screen of the gas information management unit 5 in FIG. 1.

FIG. 3 illustrates a screen 1000 that shows not only a price 1001 of the feed gas, but also a gas composition 1002 indicating a gas type such as hydrogen or methane and a ratio thereof, and manufacturing information 1003 indicating a ratio and a price for each manufacturing method of hydrogen gas or each origin, and the like. Alternatively, environmental load information such as a carbon dioxide discharge rate and energy consumption during manufacturing and transportation for each manufacturing method or each origin may be held in the gas price database 10, and may be presented on the screen 1000 of the gas information management unit 5 or in the manufacturing information 1003 together with the price. Additionally, past prices of feed gas and results of an environmental load may be presented as past information. At this time, the information may be displayed by directly displaying a numerical value as an average value before designated time or during a designated period, or may be displayed as a bar graph or a line chart that is a form in which a variation state can be checked.

The gas information management unit 5 may be provided with a selection unit with which a result determined by the consumer can be input. For example, gas usage may be stopped when the consumer determines to currently stop the gas usage based on a current price of the feed gas 103 and the environmental load information. The selection unit may enable reservation for starting use of the feed gas 103 from a predetermined time.

### Third embodiment

The present embodiment will describe an example of a method of calculating the concentration information 201 on the feed gas 103 acquired by the gas information management unit 5 by simulation based on structure of the pipeline 1 and supply and demand information (fluid information at a demand point and a supply point) for the gas price management system of the first embodiment (FIG. 1). Although the feed gas 103 may contain green hydrogen, blue hydrogen, gray hydrogen, natural gas, methane derived from natural gas, synthetic methane, and the like, origin and the like of these gases are usually less likely to be determined.

The present embodiment enables concentration information on gas, which is less likely to be directly measured, to be calculated by simulation. Simulation in consideration of temporal and spatial factors enables origin of gas at a demand point to be calculated.

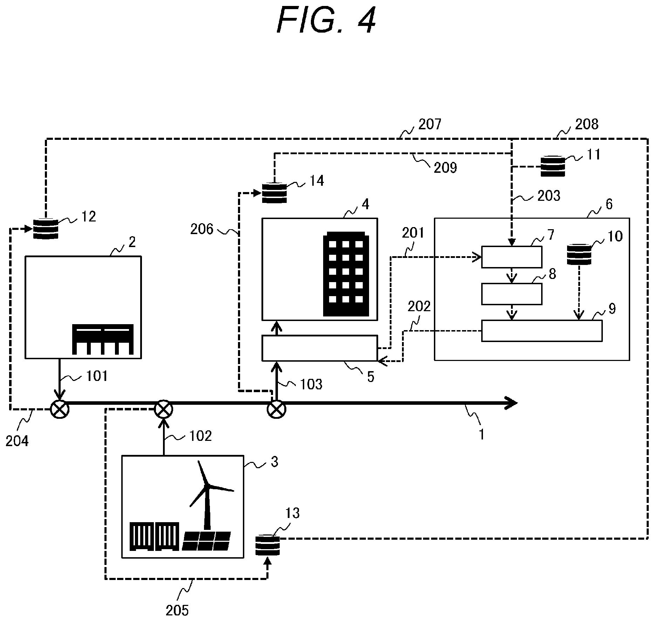

FIG. 4 is a schematic diagram illustrating a gas price management system according to a third embodiment.

FIG. 4 illustrates a configuration that is different from that of FIG. 1 in the following.

FIG. 4 illustrates a gas price management system that includes a pipeline shape information database 11, gas supply databases 12 and 13, and a gas usage database 14.

The gas concentration ratio calculation unit 8 calculates an estimated value of the concentration information on gas by receiving pipeline shape information 203 on the structure of the pipeline 1 acquired in advance and stored in the pipeline shape information database 11, the amount of gas extracted at a demand point, and the amount of gas injected at a supply point. The amount of gas extracted at the demand point is used as gas usage information 209 from the gas usage database 14 storing a gas extraction amount measurement value 206. The amount of gas injected at the supply point is used by collecting gas supply information 207 and 208 from the gas supply databases 12 and 13 storing gas injection amount measurement values 204 and 205 for each injection base. Although the gas supply databases 12 and 13 are installed for each supply base in the present embodiment, the gas supply information at a plurality of supply bases may be integrated into one gas supply database.

The gas concentration ratio calculation unit 8 may calculate a predicted value of a ratio for each gas different in an environmental value in feed gas by receiving the pipeline shape information 203, a gas extraction schedule or demand prediction at the demand point, and a gas injection schedule at the supply point.

For calculation of an estimated value of the concentration information on gas, a fluid analysis model configured by a physical formula may be used, or a machine learning model obtained by optimization using actual data may be used.

When the estimated value of the concentration information on gas is calculated by simulation using the fluid analysis model configured by the physical formula, gas identical in type and different in a manufacturing method and origin is treated as another gas identical in physical properties. For example, hydrogen injected at the by-product hydrogen supply base 2 and hydrogen injected at the renewable hydrogen supply base 3 are individually calculated as different gases having physical properties of hydrogen gas.

### Fourth embodiment

The present embodiment will describe an example in which information after a predetermined time has elapsed is calculated in addition to information at the present time for the concentration information 201 on the feed gas 103, which is acquired by the gas information management unit 5, for the gas price management system of the third embodiment. The present embodiment enables predicting concentration information on gas not only at the present time but also after a predetermined time has elapsed. As a result, a consumer side can determine to shift usage time of the gas, for example, by using a current gas price and a current environmental load, and a future gas price and a future environmental load. For example, when gas after two hours is more preferable for the consumer than current gas from the viewpoint of price and environmental load, the gas preferable for the consumer can be used by shifting the usage time to that after two hours.

The present embodiment uses a system configuration diagram as in the third embodiment.

The concentration information on gas is calculated by receiving the pipeline shape information 203 acquired in advance and stored in the pipeline shape information database 11, the amount of gas extracted at a demand point, and the amount of gas injected at a supply point.

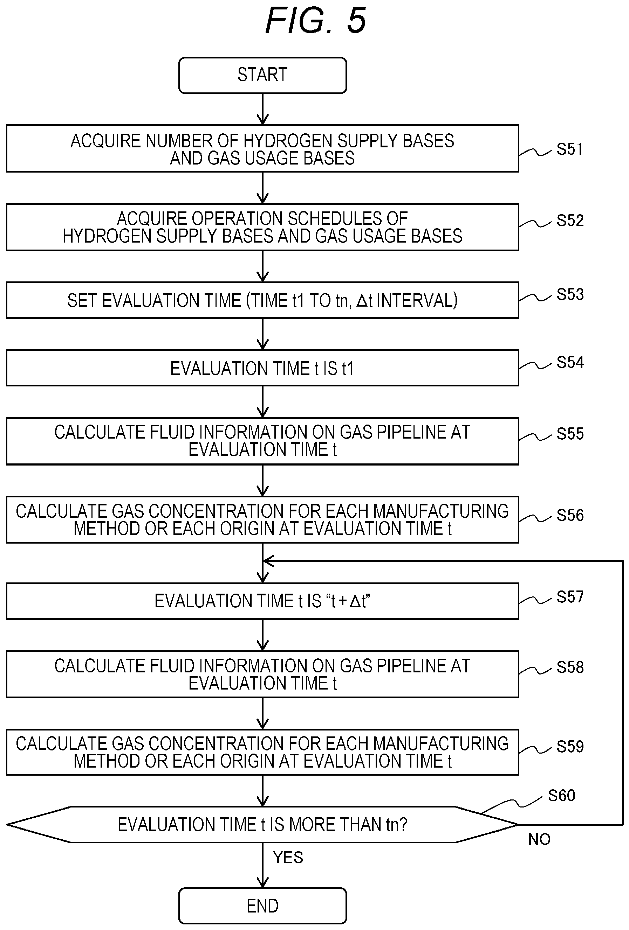

FIG. 5 is a flow diagram illustrating a method for calculating fluid information in the pipeline 1 at evaluation times t1 to tn.

In FIG. 5, the numbers of gas supply bases and gas demand points connected to the pipeline 1 are first acquired (step S51) .

Next, an operation schedule of each of the gas supply bases and gas usage bases is acquired (step S52). The operation schedule here refers to a gas injection schedule at each gas supply base and a gas extraction schedule at each demand point at the set evaluation times t1 to tn. The gas injection schedule refers to information such as a manufacturing method or origin at a gas injection base and the amount of hydrogen gas injected, injection pressure, and an injection flow rate at each time. The gas extraction schedule refers to the amount of gas extracted, an extraction flow rate, the amount of heat required, and the like, at each time.

When the operation schedule at the demand point after elapse of the predetermined time cannot be here acquired, the schedule may be calculated from a demand prediction model. Operation information at a current time may be acquired online by measurement. The above contents may be used in combination. Examples of the combination include a combination of the amount of gas extracted at the demand point, which is acquired using information acquired online as information at the current time, an acquired schedule from the current time to two hours after, and a schedule calculated by the demand prediction model from the two hours after to six hours after, and the amount of gas injected at the supply point, which is acquired using an acquired schedule.

Next, an evaluation time is set (step S53). The present embodiment will describe the evaluation time that is set from a current time t1 to a time tn and an evaluation interval that is set to Δt.

Next, the evaluation time is set to the current time t1 (step S54), and fluid information such as flow velocity and pressure of the pipeline 1 to be evaluated in a current gas grid is calculated by receiving pipeline and gas injection mechanism shape information acquired in advance (step S55). In other words, the fluid information at the current time t1 is calculated.

Next, gas concentration for each manufacturing method or each origin is calculated from the fluid information in the pipeline 1 at a time t of t1 (step S56).

Subsequently, the time is advanced from t1 to "t1 + Δt" (step S57). After the fluid information in the gas grid at the current time t1, the gas injection schedule and the gas extraction schedule in a period from the evaluation time t1 to the evaluation time "t1 + Δt", and the pipeline information acquired in advance are received, the fluid information in the pipeline 1 at the evaluation time "t1 + Δt" is calculated (step S58), and the gas concentration for each manufacturing method or each origin is calculated (step S59).

The calculation is repeated until the evaluation time t exceeds a set maximum value tn of the evaluation time (step S60) .

The gas concentration for each manufacturing method or each origin calculated from the set evaluation time t1 to the time tn is used as the gas concentration information.

### Fifth embodiment

The present embodiment will describe an example of a method for measuring the concentration information 201 of the feed gas 103 acquired by the gas information management unit 5 using a tracer substance for the gas price management system of the first embodiment (FIG. 1). The present embodiment enables concentration information on gas, which is less likely to be directly measured, to be acquired. Unlike electricity, gas requires a certain amount of time for transportation, and thus origin needs to be calculated including a transportation state.

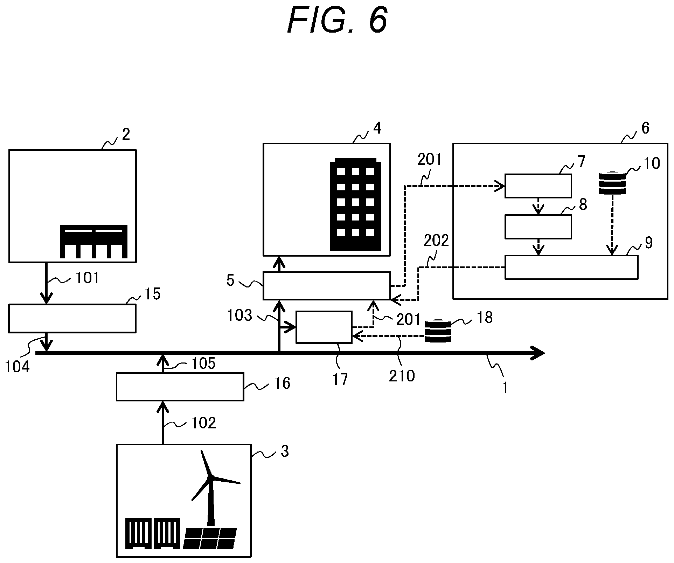

FIG. 6 is a schematic diagram illustrating a gas price management system according to a fifth embodiment.

In the gas supply base (the by-product hydrogen supply base 2 and the renewable hydrogen supply base 3), a tracer substance of a type set corresponding to a manufacturing method or origin is added at a constant concentration by the tracer addition units 15 and 16. The by-product hydrogen supply base and the renewable hydrogen supply base are different in a manufacturing method of hydrogen, and thus use respective tracer substances different from each other. When a tracer A is added in the by-product hydrogen supply base and a tracer B is added in the renewable hydrogen supply base, the by-product hydrogen 101 is supplied to the pipeline 1 as by-product hydrogen 104 with the tracer A added, and the renewable hydrogen 102 is supplied to the pipeline 1 as renewable hydrogen 105 with the tracer B added. Here, the tracer substance may be any substance as long as the substance is less likely to react with gas transported in the pipeline 1 or spontaneously decompose without a great variation in concentration, and can be measured at a demand point. When an odorant is added to the gas in the pipeline 1, the odorant may be used as a tracer substance.

A type and concentration of a tracer at each supply base are determined in advance. Tracer concentration may be constant in all supply bases or may be designated for each supply base. The type and concentration of the tracer at each supply base may be aggregated in a tracer information database 18.

At the demand point, a gas concentration measurement unit 17 calculates gas concentration for each manufacturing method or each origin. The gas concentration measurement unit 17 measures concentration of a tracer substance for each manufacturing method or each origin. The type and addition concentration of the tracer substance at each supply base are given as tracer information 210 from the tracer information database 18 to the gas concentration measurement unit 17. The type of the tracer substance corresponds to a manufacturing method or origin. When each supply base is equal in tracer concentration, a concentration ratio of each tracer substance corresponds to a concentration ratio for each manufacturing method or each origin. When each base is different in tracer concentration, gas concentration for each manufacturing method or each origin is calculated from a ratio of the tracer concentration to addition concentration for each base. A ratio of gas for each manufacturing method or each origin can be calculated from the gas concentration for each manufacturing method or each origin calculated for each tracer substance.

Although the above embodiment is described based on the premise that gas is supplied through a pipeline, supply of the gas according to the present disclosure is not limited to that using the pipeline, and thus the gas may be supplied by transportation using a transportation vehicle, a railway, or the like. When a plurality of pipelines is separately installed, the gas may be transported among the pipelines using a transportation vehicle, a railway, or the like.

Hereinafter, desirable embodiments according to the present disclosure will be collectively described.

In the gas price management system, the environmental value includes any one or more of manufacturing cost, a carbon dioxide discharge rate during manufacturing and transportation, and energy consumption during the manufacturing and the transportation.

The feed gas contains at least one or more of green hydrogen, blue hydrogen, gray hydrogen, natural gas, methane derived from natural gas, and synthetic methane.

The feed gas is supplied through a pipeline, and the ratio of each of the gas components in the feed gas is obtained by a concentration sensor, a soft sensor, a simulation intended for the pipeline, or a combination of the sensors and the simulation.

The gas price determination unit includes a gas concentration ratio calculation unit, and the gas concentration ratio calculation unit calculates the ratio of each of the gas components in the feed gas based on pipeline shape information on structure of the pipeline, an amount of gas extracted at a demand point provided in the pipeline, and an amount of gas injected at a supply point provided in the pipeline.

The gas price determination unit includes a gas concentration ratio calculation unit, the supply point provided in the pipeline is provided with a tracer addition unit that adds a tracer substance to the gas in the pipeline, the demand point provided in the pipeline is provided with a gas concentration measurement unit that measures concentration of the tracer substance, and the gas concentration ratio calculation unit calculates the ratio of each of the gas components in the feed gas using information on a type of the tracer substance and the concentration of the tracer substance.

The gas price determination unit calculates a predicted value of the ratio of each of the gas components in the feed gas based on the pipeline shape information on the structure of the pipeline, a gas extraction schedule or a demand prediction at a demand point provided in the pipeline, and a gas injection schedule at a supply point provided in the pipeline.

The gas components having a plurality of origins are substances identical in kind.

The gas components having the plurality of origins are hydrogen.

The gas information management unit includes a display screen.

The gas price management method includes: acquiring concentration information on a feed gas containing gas components having a plurality of origins different in an environmental value using a gas information management unit; and setting a price of the feed gas using a ratio of each of the gas components in the feed gas obtained from concentration information on the feed gas and a gas price set based on an environmental value of each of the gas components by using a gas price determination unit.

The gas price determination unit calculates the ratio of each of the gas components in the feed gas by using information on a type of the tracer substance added to the gas in the pipeline and concentration of the tracer substance at a demand point provided in the pipeline.

### Reference Signs List

1 pipeline
2 by-product hydrogen supply base
3 renewable hydrogen supply base
4 gas usage base
5 gas information management unit
6 gas price determination unit
7 gas information acquisition unit
8 gas concentration ratio calculation unit
9 gas price calculation unit
10 gas price database
11 pipeline shape information database
12, 13 gas supply database
14 gas usage database
15, 16 tracer addition unit
17 gas concentration measurement unit
101 by-product hydrogen
102 renewable hydrogen
103 feed gas
104 by-product hydrogen with tracer A added
105 renewable hydrogen with tracer B added
201 concentration information
202 price information
203 pipeline shape information
204 gas injection amount measurement value
205 gas injection amount measurement value
206 gas extraction amount measurement value
207, 208 gas supply information
209 gas usage information
210 tracer information

## Claims

1. A gas price management system comprising:
a gas information management unit configured to manage information on a feed gas including gas components having a plurality of origins different in an environmental value; and
a gas price determination unit configured to determine a price of the feed gas,
wherein the gas information management unit transmits concentration information on the feed gas to the gas price determination unit, and
the gas price determination unit sets the price of the feed gas using a ratio of each of the gas components in the feed gas obtained from the concentration information on the feed gas and a gas price set based on the environmental value of each of the gas components.

2. The gas price management system according to claim 1, wherein the environmental value includes any one or more of manufacturing cost, a carbon dioxide discharge rate during manufacturing and transportation, and energy consumption during the manufacturing and the transportation.

3. The gas price management system according to claim 1, wherein the feed gas contains at least one or more of green hydrogen, blue hydrogen, gray hydrogen, natural gas, methane derived from natural gas, and synthetic methane.

4. The gas price management system according to claim 1, wherein
the feed gas is supplied through a pipeline, and
the ratio of each of the gas components in the feed gas is obtained by a concentration sensor, a soft sensor, a simulation intended for the pipeline, or a combination of the sensors and the simulation.

5. The gas price management system according to claim 4, wherein
the gas price determination unit includes a gas concentration ratio calculation unit, and
the gas concentration ratio calculation unit calculates the ratio of each of the gas components in the feed gas based on pipeline shape information on structure of the pipeline, an amount of gas extracted at a demand point provided in the pipeline, and an amount of gas injected at a supply point provided in the pipeline.

6. The gas price management system according to claim 4, wherein
the gas price determination unit includes a gas concentration ratio calculation unit,
the supply point provided in the pipeline is provided with a tracer addition unit that adds a tracer substance to the gas in the pipeline,
the demand point provided in the pipeline is provided with a gas concentration measurement unit that measures concentration of the tracer substance, and
the gas concentration ratio calculation unit calculates the ratio of each of the gas components in the feed gas using information on a type of the tracer substance and the concentration of the tracer substance.

7. The gas price management system according to claim 4, wherein
the gas price determination unit includes a gas concentration ratio calculation unit, and
the gas concentration ratio calculation unit calculates a predicted value of the ratio of each of the gas components in the feed gas based on the pipeline shape information on the structure of the pipeline, a gas extraction schedule or a demand prediction at a demand point provided in the pipeline, and a gas injection schedule at a supply point provided in the pipeline.

8. The gas price management system according to claim 1, wherein the gas components having a plurality of origins are substances identical in kind.

9. The gas price management system according to claim 1, wherein the gas components having the plurality of origins are hydrogen.

10. A gas price management method comprising:
acquiring concentration information on a feed gas containing gas components having a plurality of origins different in an environmental value using a gas information management unit; and
setting a price of the feed gas using a ratio of each of the gas components in the feed gas obtained from concentration information on the feed gas and a gas price set based on an environmental value of each of the gas components by using a gas price determination unit.

11. The gas price management method according to claim 10, wherein the environmental value includes any one or more of manufacturing cost, a carbon dioxide discharge rate during manufacturing and transportation, and energy consumption during the manufacturing and the transportation.

12. The gas price management method according to claim 10, wherein the feed gas contains at least one or more of green hydrogen, blue hydrogen, gray hydrogen, natural gas, methane derived from natural gas, and synthetic methane.

13. The gas price management method according to claim 10, wherein
the feed gas is supplied through a pipeline, and
the ratio of each of the gas components in the feed gas is obtained by a concentration sensor, a soft sensor, a simulation intended for the pipeline, or a combination of the sensors and the simulation.

14. The gas price management method according to claim 13, wherein the gas price determination unit calculates the ratio of each of the gas components in the feed gas based on pipeline shape information on structure of the pipeline, an amount of gas extracted at a demand point provided in the pipeline, and an amount of gas injected at a supply point provided in the pipeline.

15. The gas price management method according to claim 13, wherein the gas price determination unit calculates the ratio of each of the gas components in the feed gas by using information on a type of the tracer substance added to the gas in the pipeline and concentration of the tracer substance at a demand point provided in the pipeline.

16. The gas price management method according to claim 13, wherein the gas price determination unit calculates a predicted value of the ratio of each of the gas components in the feed gas based on the pipeline shape information on the structure of the pipeline, a gas extraction schedule or a demand prediction at a demand point provided in the pipeline, and a gas injection schedule at a supply point provided in the pipeline.

17. The gas price management method according to claim 10, wherein the gas components having a plurality of origins are substances identical in kind.

18. The gas price management method according to claim 10, wherein the gas components having the plurality of origins are hydrogen.
